(19) Europäisches Patentamt
European Patent Office
Office européen des brevets

(11) **EP 1 260 172 A2**

(12) **EUROPEAN PATENT APPLICATION**

(43) Date of publication:
27.11.2002 Bulletin 2002/48

(51) Int Cl.⁷: **A61B 5/00**, A61B 5/12

(21) Application number: 01119240.8

(22) Date of filing: 09.08.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 22.05.2001 KR 2001028161

(71) Applicant: **Metatech Co., Ltd.**
**Sihung-si, Kyoungki-do (KR)**

(72) Inventors:
• **Hur, Won Haeng**
**Daejeon-si (KR)**

• **Kang, Hee Man**
**Anyang-si (KR)**
• **Jeong, Dong Won**
**336 Songrim-5dong, Dong-ku Inchen-si (KR)**
• **Jeon, Min Seok**
**Seoul (KR)**

(74) Representative: **Viering, Jentschura & Partner**
**Postfach 22 14 43**
**80504 München (DE)**

(54) **Infrared ray clinical thermometer**

(57) An infrared ray clinical thermometer (10) is disclosed. The infrared ray clinical thermometer for detecting infrared rays from an eardrum to measure a body temperature includes the following elements. A main body (30) is provided for being held by hand. A probe part (20) is detachably attached to the main body and has a leading end part for being inserted into an external auditory conduit, the leading end part having an inlet hole for receiving incident infrared rays. An infrared ray sensor is installed within the leading end part of the probe part. The probe part includes the following elements. That is, a hollow speculum is for being inserted into the external auditory conduit. A sensor housing is for accommodating the infrared ray sensor and is adhesively installed within the speculum. An airtight member is provided on a leading end of the sensor housing. The infrared ray sensor is made to approach the eardrum as close as possible, so that the infrared rays from the eardrum can be directly detected. Further, any intrusion of moisture can be completely prevented. As a result, an accurate measurement of the body temperature can be realized.

FIG 1

EP 1 260 172 A2

**Description**

FIELD OF THE INVENTION

The present invention relates to an infrared ray clinical thermometer. More specifically, the present invention relates to an infrared ray clinical thermometer in which the distance between an infrared ray sensor and the eardrum membrane is minimized, and the probe part is made airtight, so that accurate temperature measurements can be possible.

BACKGROUND OF THE INVENTION

Generally, the clinical thermometer is classified into contacting type and non-contacting type. As the contacting type thermometers, there are the alcohol or mercury thermometers, and the electronic thermometers such as thermistors, thermocouples and the like.

These contacting type thermometers are contacted to the surfaces of the objects, and the temperature at the thermal equilibrium is measured. In these thermometers, usually 2-3 minutes are required until the thermal equilibrium is attained.

Further, in hospitals where many patients are measured, the thermometers are inserted into armpits, into mouths and into anuses, and therefore, people can be displeased when measuring the body temperature. Further, if the mercury thermometer is destroyed during the measurement, then a fatal harm can be inflicted to the patient.

In order to overcome these disadvantages, the non-contacting type thermometers have been developed. In these non-contacting type thermometers, the infrared rays released from the eardrum membrane or the like are detected, and are converted into electrical signals to measure the body temperature. In these non-contacting type thermometers, the measurements are quick and accurate.

The reason why the eardrum portion is measured is that the eardrum shares the blood with the hypothalamus of the brain, and therefore, it accurately reflects the core temperature.

Every object which has a temperature other than 0 degrees K radiates infrared rays of certain wavelengths, and this principle can be defined by the Stephan-Boltzmann equation as follows:

$$E = k\varepsilon\, T^4$$

where E is the infrared ray energy, k is the Boltzmann constant, $\varepsilon$ is the infrared ray radiation rate, and T is the surface temperature. That is, the energy released from the eardrum is equivalent to the surface temperature-to-power-4.

The electronic clinical thermometer includes: an infrared ray sensor for detecting the radiated energy to convert it into electrical signals; and a circuit for amplifying and processing the electrical signals.

The electronic clinical thermometer further includes: a conical probe for being inserted into the external auditory conduit; and a wave guide having a small diameter and a certain length, and installed within the probe.

The wave guide includes an inlet part which is positioned nearest to the eardrum. The inlet part guides the incident infrared rays into the wave guide to send them to an infrared ray sensor which is installed at an outlet part of the wave guide, thereby measuring the body temperature. The inside surface of the wave guide is coated with gold, so that a high reflectivity can be ensured.

In this conventional infrared ray clinical thermometer, however, the incident infrared rays have to necessarily pass through the wave guide, but the wave guide has a small diameter, with the result that there is a difficulty in guiding the infrared rays.

Further, when the infrared rays are guided to the infrared ray sensor, the infrared rays undergo surface reflections within the wave guide many times, and therefore, the intensities of the infrared rays are decreased. Further, the heat which is released from the surrounding external auditory conduit is easily transferred to the wave guide, and therefore, a thermal inequilibrium occurs, with the result that the body temperature cannot be accurately measured.

Further, in the conventional infrared ray thermometer, the airtight status is not sufficient, and therefore, moisture can intrude into the probe. For example, if a child plays with the thermometer at a home, and if the child inserts the thermometer into water or into his or her mouth, then water can easily intrude into the probe and the wave guide.

Thus if the water is absorbed into the reflective surface of the wave guide, then the surface is contaminated, with the result that the reflection capability is drastically decreased, thereby aggravating the accuracy of the detection of the infrared rays.

Further, if moisture is absorbed into the surface of the infrared ray sensor, the incident infrared rays are affected or a temperature variation is induced in the infrared ray sensor owing to the water evaporation and re-absorption of water. Consequently, the temperature measurement is adversely affected.

SUMMARY OF THE INVENTION

The present invention is intended to overcome the above described disadvantages of the conventional techniques.

Therefore it is an object of the present invention to provide an infrared ray clinical thermometer in which the distance between the infrared ray sensor and the eardrum is minimized, and any intrusion of moisture into the probe is prevented, thereby ensuring an accurate measurement of the body temperature.

In achieving the above object, the infrared ray clinical thermometer for detecting infrared rays from an eardrum to measure a body temperature according to the present invention includes: a main body for being held by hand; a probe part detachably attached to the main body and having a leading end part for being inserted into an external auditory conduit, the leading end part having an inlet hole for receiving the incident infrared rays; and an infrared ray sensor installed within the leading end part of the probe part.

The probe part includes: a hollow speculum for being inserted into the external auditory conduit; a sensor housing for accommodating the infrared ray sensor and adhesively attached onto the inside of the speculum; and an airtight member provided on a leading end of the sensor housing.

The speculum is hollow and conical, and is made of silicon rubber. The airtight member is a planar silicon wafer, and is disposed evenly with the leading end of the speculum. The sensor housing has an incident angle expansion part at its leading end, and has a male thread part at its rear end so that the probe part can be threadably secured to the main body by using a nut with a female thread part formed thereon.

The infrared ray sensor of the sensor housing includes: a cap, a sensing device, a stem and a lead pin. The cap has a silicon wafer filter, and the filter is disposed in parallel with the airtight member. Surrounding the infrared ray sensor, there is a heat transferring member (which is made of a metal) for transferring the ambient heat to the infrared ray sensor.

Preferably, a thermal diffusion member is provided for securing the infrared ray sensor and the heat transferring member, and for transferring the ambient heat within the external auditory conduit to the infrared ray sensor.

The heat transferring member is made of copper, and the thermal diffusion member is made of a resin, while there is disposed a heat insulating part between the sensor housing and the infrared ray sensor.

## BRIEF DESCRIPTION OF THE DRAWINGS

The above object and other advantages of the present invention will become more apparent by describing in detail the preferred embodiment of the present invention with reference to the attached drawings in which:

FIG. 1 is a perspective view showing the external appearance of the infrared ray clinical thermometer according to the present invention;
FIG. 2 is an enlarged sectional view of the probe part of the infrared ray clinical thermometer according to the present invention;
FIG. 3 is an exploded sectional view of the probe part of the infrared ray clinical thermometer according to the present invention;
FIG. 4 illustrates the coupling between the main body and the probe part of the infrared ray clinical thermometer according to the present invention; and
FIG. 5 is a sectional view of the infrared ray clinical thermometer according to the present invention.

## DETAILED DESCRIPTION OF THE PREFERRED EMBODIMENT

The preferred embodiment of the present invention will be described in detail referring to the attached drawings.

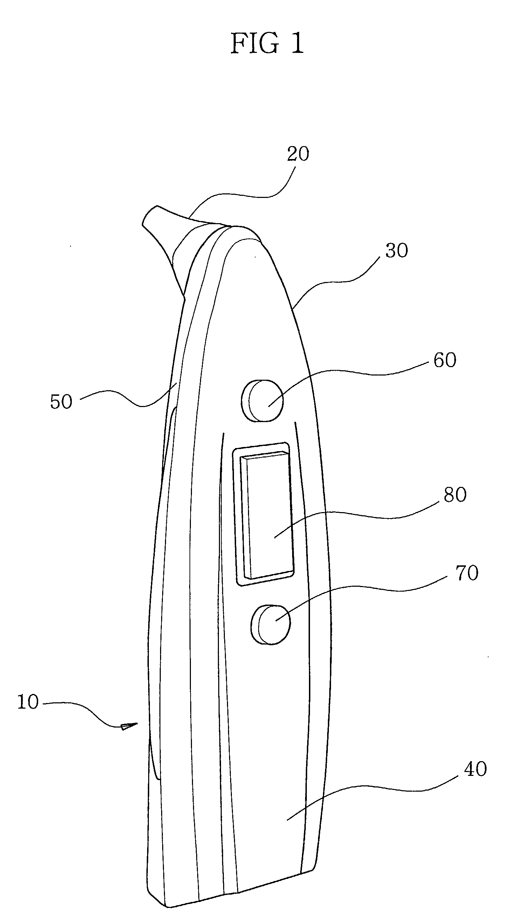

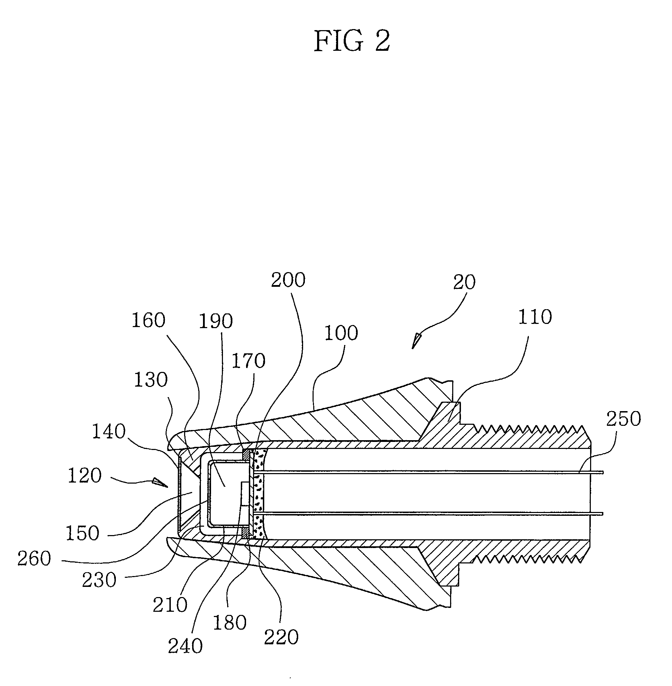

FIG. 1 is a perspective view showing the external appearance of the infrared ray clinical thermometer 10 according to the present invention. FIG. 2 is an enlarged sectional view of the probe part 20 of the infrared ray clinical thermometer according to the present invention. For the sake of the describing convenience, it will be assumed that the upper portion and the lower portion will be called respectively " upper portion" and " lower portion" in FIG. 1, and that the left part and the right part will be called " leading part" and " rear part" respectively in FIG. 2.

As shown in FIG. 1, the infrared ray clinical thermometer 10 according to the present invention includes: a main body 30 for being held by human hand; and a probe part 20 inclinedly connected to the main body 30, for being inserted into the external auditory conduit.

The main body 30 consists of an upper casing 40 and lower casing 50. The probe part 20 is secured to the leading end portion of the lower casing 50. The upper casing 40 includes: an operation button 60 for activating the infrared ray clinical thermometer 10; and a function button 70 for converting the Celsius degrees to Fahrenheit degrees, and vice versa.

Further, there is a display part 80 for displaying the operation status of the thermometer 10, and for displaying an error message and the power status.

Upon the main body 30, there is secured the probe part 20 which detects the infrared rays of the eardrum so as to output electrical signals. The probe part 20 is inclinedly secured to the main body 30, and according as coming toward the leading end, the probe part 20 is conically tapered.

As shown in FIG. 2, the probe part 20 consists of a conical hollow speculum 100, so that the probe part 20 can be easily inserted into the external auditory conduit. The speculum 100 is made of silicon rubber, so that no harm can be inflicted on the human body.

A portion of the tapered speculum 100 is attached to a portion of a sensor housing 110 by using an adhesive, while a first leading hole 120 is formed in the leading end of the speculum 100, so that the infrared rays radiated from the eardrum and the surrounding portions can easily pass through.

The sensor housing 110 should be hollow, and should be preferably made of a high thermal conductivity metal such as copper, aluminum, or zinc.

The sensor housing 110 is airtightly attached to the speculum 100, and therefore, moisture cannot intrude into between them.

A first step 130 is formed around the leading end portion of the sensor housing 110, and an airtight member 140 is attached onto the first step 130 by using an epoxy resin, so that the interior of the sensor housing 110 can be protected from moisture by the airtight member 140.

The airtight member 140 not only prevents the intrusion of moisture, but also is finely ground so as to minimize the loss of infrared rays. The airtight member 140 should preferably consist of a highly reflectively coated mono-crystalline silicon wafer which is properly cut.

Further, a thin silicon wafer can be used as the airtight member 140 to improve the infrared ray transmittance, but due to the apprehension of damages, and considering the mechanical strength, a silicon wafer 0.2~0.3 mm thick should be used.

Thus the probe part 20 of the thermometer 10 of the present invention is made airtight (and waterproof) by the speculum 100 and the airtight member 140. Accordingly, even if a child inserts the thermometer 10 into his or her mouth, water cannot intrude into the probe part 20, and therefore, the apprehended problem can be surely solved.

A second leading end hole 150 which is formed in the leading end portion of the sensor housing 110 is such that its diameter is expanded as coming toward the leading end. Thus an incident angle expansion part 160 is formed, and this is for easily receiving the incident infrared rays which have been radiated from the eardrum.

Thus if the incident angle is expanded, the probe part 20 which is inserted into the external auditory conduit needs not be disposed necessarily coaxially with the axis of the eardrum, but can receive the infrared rays only by approaching the eardrum.

Further, a second step 170 is formed on the inside of the leading end portion of the sensor housing 110, and a hollow cylindrical heat transferring member 180 is disposed in such a manner that the outer surface of the member 180 is contacted to a part of the inside of the sensor housing 110.

At the same time, an infrared ray sensor 190 is inserted into the heat transferring member 180 in such a manner that parts of a stem 200 and a cap 210 of the infrared ray sensor 190 are airtightly contacted to the heat transferring member 180.

The heat transferring member 180 should be preferably made of a high thermal conductivity metal such as copper, aluminum or zinc, so that the thermal conduction would be high between the stem 200 of the infrared ray sensor 190 and the sensor housing 110.

Alternatively, the heat transferring member 180 may be eliminated, and the outside diameter of the stem 200 can be expanded, or a protrusion may be formed within the sensor housing 110 in such a manner that a part of the infrared ray sensor 190 can be contacted to the sensor housing 110. However, if the outside diameter is expanded, the contact area is decreased, with the result that the thermal conduction is decreased.

Further, when the infrared ray sensor 190 is inserted, a position error or an inclination should not be present, and therefore, a higher precision is required when machining the sensor housing 110. Accordingly, the manufacturing cost is increased.

Accordingly, the heat transferring member 180 should be sufficiently contacted to the sensor housing 110 and to the infrared ray sensor 190, so that the thermal conduction can be improved. In this manner, the manufacturing cost can be curtailed, and the infrared ray sensor 190 should be installed at the correct position within the sensor housing 110.

A part of the sensor housing 110, i.e., the portion where the heat transferring member 180 and the stem 200 are facing to each other is covered by a thermal diffusion member 220.

The thermal diffusion member 220 should be preferably made of a high thermal conductivity thermosetting epoxy resin so that it can help the heat transferring member 180 in causing a speedy heat dispersion by removing the thermal gradient in the stem 200 of the infrared ray sensor 190.

Further, the heat transferring member 180 and the infrared ray sensor 190 are firmly secured within the sensor housing 110 by the thermal diffusion member 220.

The thermal diffusion member 220 should be preferably filled to a height of 4~5 mm from the rear end of the stem 200. If the thermal diffusion member 220 is filled too much, then the heat content is increased, and therefore, temperature gradients partially remain. As a result, if the thermometer is continuously used, errors are liable to occur.

The cap 210 of the infrared ray sensor 190 is separatedly positioned from the leading end of the sensor housing 110 so as to provide a heat insulating part 230. This is for preventing the ambient heat of the external auditory conduit from being conducted to the cap 210 of the infrared ray sensor 190.

If heat is accumulated in the cap 210, then infrared rays are radiated from the inside of the cap 210 to the sensing device 240, and this heat is undistinguishable from the heat of the eardrum, with the result that errors may occur during the measurement of the body temperature.

Within the cap 210 of the infrared ray sensor 190, there is the sensing device 240 which is contacted to the stem 200. The stem 200 is provided with a lead pin 250 for transmitting the electrical signals from the sensing device 240 to the main body 30.

The sensing device 240 consists of a thermopile or a thermo-resistive converting element, or a combination of both of them.

The interactions between the heat of the eardrum (and the ambient heat) and the infrared ray sensor 190 (particularly the sensing device 240) will be described below in detail.

For the sake of the describing convenience, the infrared rays which are radiated from the eardrum and the vicinity will be called " eardrum infrared rays" , while the heat within the external auditory conduit will be called " ambient heat" .

The eardrum infrared rays of the visual sight region which is decided by the incident angle expansion part 160 pass through the airtight member 140 and the filter 260.

The filter 260 consists of a silicon wafer on which a multi-layer coating is carried out. The multi-layer coating is formed by alternately depositing non-reflection interference films and ZnS films and Ge films, the latter two kinds of films allowing only the infrared rays of $7{\sim}15$ μm wavelength. Accordingly, only the infrared rays with a particular wavelength are received to the sensing device 240.

The eardrum infrared rays which are incident to the sensing device 240 are converted into heat to elevate the temperature of the sensing device 240. Thus ultimately, electrical signals which correspond to the temperature variation of the sensing device 240 are generated in the lead pin 250.

That is, the electrical signals are generated correspondingly with $\Delta T$ which is the temperature difference between T1 (which is the temperature of the sensing device 240 before inserting it into the external auditory conduit) and T2 (which is the temperature varied by the infrared rays of the eardrum).

However, when inserting the probe part 20 into the external auditory conduit, the speculum 100 is inevitably contacted to the inside of the external auditory conduit. Accordingly, the temperature T1 of the sensing device 240 is affected by the ambient heat.

That is, the temperature difference $\Delta T$ is varied anytime, and therefore, measurement errors occur. Therefore, during the measurement, if T1 is not maintained at a constant level, then a measurement error occurs at every measurement, thereby degrading the reliability of the product.

However, the infrared ray thermometer according to the present invention has the following features. That is, a heat insulating part 230 is formed within the leading end portion of the sensor housing 110, and therefore, the ambient heat is prevented from being conducted to the cap 210 of the infrared ray sensor 190. Therefore, the ambient heat which pass through the speculum 100 and the sensor housing 110 is conducted limitedly only to the stem 200 of the infrared ray sensor 190.

That is, the ambient heat is conducted through the speculum 100 to the sensor housing 110, and heat exchanges occur in the regions of the heat transferring member 180 and the thermal diffusion member 220, which are contacted to the sensor housing 110.

The speculum 100 is attached to the sensor housing 110 in an airtight form. The speculum 100 is made of a material which is superior over the ABS synthetic resin in the thermal conductivity. Further, there is no hollow space between the speculum 100 and the sensor housing 110, and therefore, the ambient heat can be rapidly conducted away.

The ambient heat which has been conducted to the sensor housing 110 is conducted through the heat transferring member 180 (which is contacted to the second step 170) to the stem 200 of the infrared ray sensor 190. Meanwhile, a part of the rest of the ambient heat is conducted to the thermal diffusion member 220 which is contacted to the sensor housing 110. Another part of the rest of the ambient heat is conducted toward the rear portion of the sensor housing 110.

The heat which has been conducted to the heat transferring member 180 and the thermal diffusion member 220 elevates the temperature of the stem 200. The members are made of a high thermal conductivity material, and therefore, the sensing device 240 which is contacted to the stem 200 quickly attains to a constant temperature level.

Accordingly, T1 is quickly attained to a constant temperature value before starting the measurement, and therefore, $\Delta T$ is not varied, with the result that any error due to the ambient heat is avoided.

In the infrared ray thermometer according to the present invention, the infrared ray sensor 190 is disposed at the leading end portion, and therefore, the infrared rays from the eardrum are directly received to the infrared ray sensor 190, while the temperature variation of the sensing device 240 due to the ambient heat is quickly removed. Consequently, the body temperature can be accurately measured.

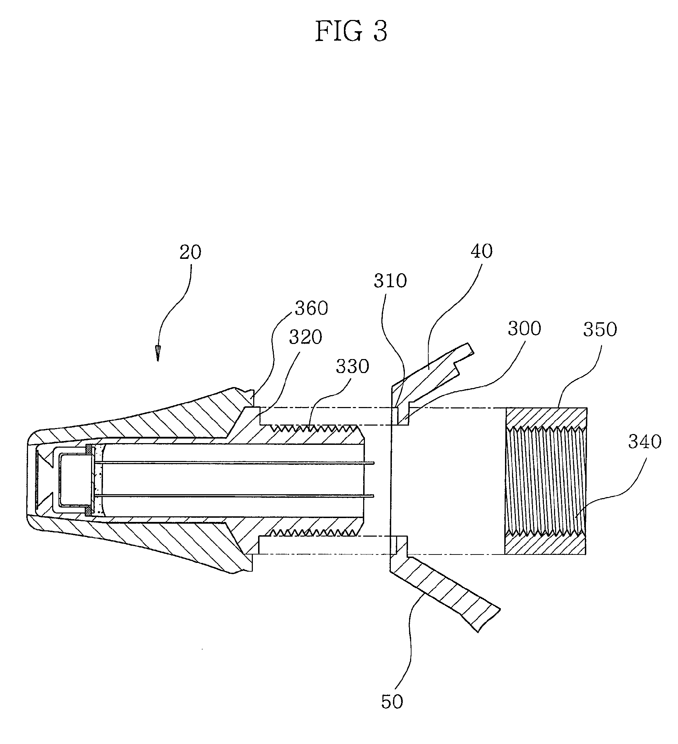

FIG. 3 is an exploded sectional view of the probe part 20 of the infrared ray clinical thermometer according to the present invention.

When assembling the probe part 20, first the sensor housing 110 and the speculum 100 are airtightly attached together by using an adhesive. Then the airtight member 140 is attached onto the first step 130 by using an epoxy resin.

Then the hollow cylindrical heat transferring member 180 is inserted into the second step 170 of the sensor housing 110. Then the infrared ray sensor 190 is inserted from the rear of the sensor housing 110 toward its leading end in such a manner that a part of the heat transferring member 180 should be contacted to the stem 200. Then the thermal diffusion member 220 is filled into under the infrared ray sensor 190 by a certain amount, and then, a thermosetting is carried out, thereby completing the probe part 20.

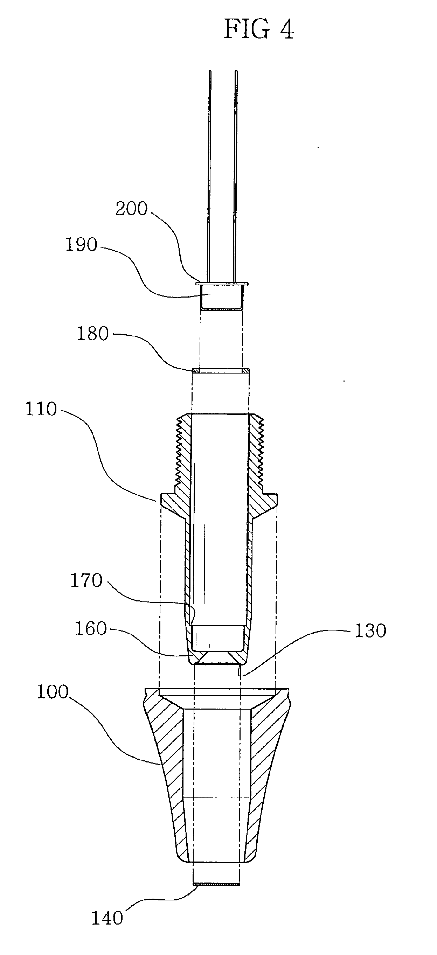

FIG. 4 illustrates the coupling between the main body 30 and the probe part 20 of the infrared ray clinical thermometer according to the present invention. On the leading end of the lower casing 50, there is a connecting protrusion 300 for receiving a part of the rear portion of the probe part 20. On the tip of the leading end portion of the lower casing 50, there is a third step 310.

First, the probe part 20 is fitted to the connecting protrusion 300, and a securing part 320 is fitted to the third step 310. Further, a male thread part 330 of the sensor housing 110 is threadably coupled to a female thread part 340 of a securing nut 350. Thus the probe part 20 is firmly secured to the main body 30.

A connecting part 360 of the probe part 20 is closely contacted to the leading end face of the main body 30, and therefore, moisture cannot intrude into the boundary between the connecting part 360 and the lower casing 50.

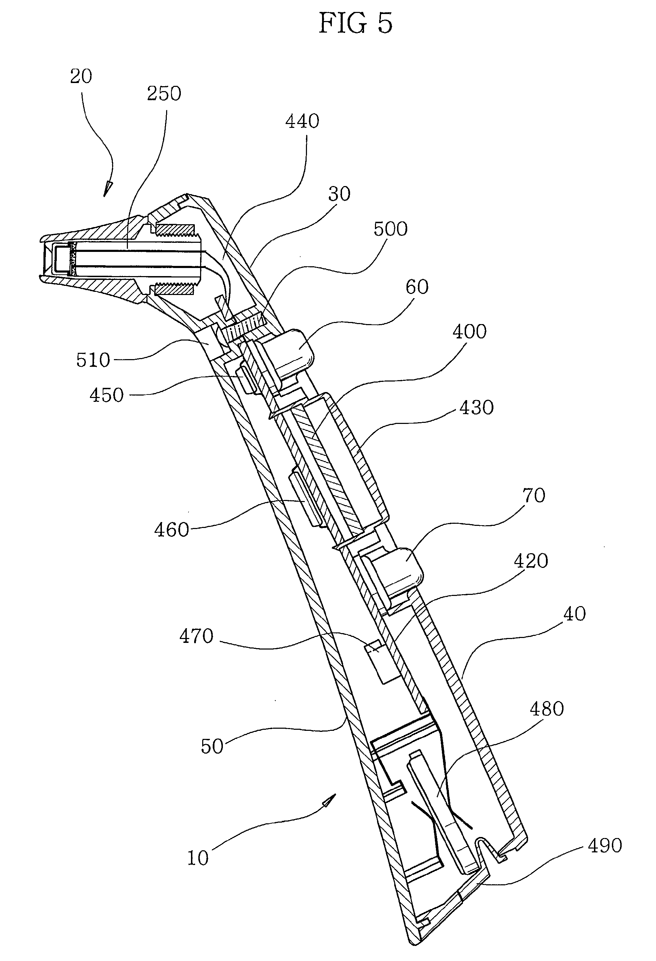

FIG. 5 is a sectional view of the infrared ray clinical thermometer according to the present invention. The probe part 20 is connected to the main body 30 in an inclined form.

A liquid crystal display 400 is formed upon a buffer member 410, and is protected by a display cover 430 which is secured on a circuit board 420, thereby forming a display part 80. The lead pin 250 of the infrared ray sensor 190 is electrically connected through a lead line 440 to a relevant region of the circuit board 420.

The circuit board 420 includes: an amplifying part 450 for amplifying the electrical signals of the probe part 20; a control part 460 for converting the output signals of the amplifying part 450 to digital signals to process the signals into a body temperature, and for carrying out various control functions; a buzzer 470 for notifying the measurement start and the measurement termination; a display part 80 for displaying the body temperature and the operation status under the control of the control part 460; an operation button 60 for activating the infrared ray thermometer to start the measurement; a function button 70 for carrying out C-F conversions and for memorizing the measured values; and a battery holder 490 for accommodating a battery 480 to supply a power to the circuit board 420.

The upper casing 40 and the lower casing 50 are coupled together by a screw 500, and a screw cap 510 is fitted upon the head of the screw 500.

Now the infrared ray thermometer according to the present invention will be described as to its measurements. First, the operation button 60 is pressed, and while holding the main body 30 with hand, the probe part 20 is inserted into the external auditory conduit. Then the measurement starting sound of the buzzer is confirmed, and then, the operation button 60 is pressed, thereby initiating the measurement.

Then the measurement termination sound is confirmed, and the probe part 20 is taken out of the external auditory conduit. Then the value of the body temperature as displayed on the display part 80 is read.

During the measurement, the infrared rays from the eardrum and its vicinity are received to the infrared ray sensor 190, and then, the incident infrared rays are converted into electrical signals to be supplied through the lead line 440 to the amplifying part 450 of the main body 30.

Thus the electrical signals are amplified by the amplifying part 450 and are made to get rid of noises. Then the electrical signals are supplied to the control part 460 to be converted to digital signals and to be processed by a microcomputer into a body temperature value. Then the temperature value is displayed on the display part 80.

Thus in the present invention, the infrared rays from the eardrum are directly detected, and moisture cannot intrude into the probe part.

Therefore, the shape of the probe part may be partly varied, or other embodiments can be realized in bringing the probe part close to the eardrum. Further, the airtight status can be realized by other means.

Such modifications should come within the scope of the present invention as long as the infrared rays from the eardrum can be directly detected, and as long as the intrusion of moisture can be perfectly prevented.

According to the present invention as described above, the infrared ray sensor is made to approach the eardrum as close as possible, so that the infrared rays from the eardrum can be directly detected. Further, any intrusion of moisture can be completely prevented. As a result, an accurate measurement of the body temperature can be realized.

**Claims**

1. An infrared ray clinical thermometer for detecting infrared rays from an eardrum to measure a body temperature, comprising:

   a main body for being held by hand;
   a probe part detachably attached to the main body and having a leading end part for being inserted into an external auditory conduit, the leading end part having an inlet hole for receiving incident infrared rays; and
   an infrared ray sensor installed within the leading end part of the probe part.

2. The infrared ray clinical thermometer as claimed in claim 1, wherein the probe part comprises:

   a hollow speculum for being inserted into the external auditory conduit;
   a sensor housing adhesively installed within the speculum, for accommodating the infrared ray sensor; and
   an airtight member provided on a leading end of the sensor housing.

3. The infrared ray clinical thermometer as claimed in claim 2, wherein the speculum is hollow and conical, and is made of silicon rubber; and
the airtight member is a planar silicon wafer, and is disposed evenly with the leading end of the speculum.

4. The infrared ray clinical thermometer as claimed in claim 2, wherein the sensor housing has an outwardly expanded incident angle expansion part at its leading end.

5. The infrared ray clinical thermometer as claimed in claim 2, wherein the sensor housing has a male thread part at its rear end so that the probe part can be threadably secured to the main body by using a nut, with a female thread part formed on the nut.

6. The infrared ray clinical thermometer as claimed in claim 2, wherein the infrared ray sensor of the sensor housing comprises: a cap, a sensing device, a stem and a lead pin, the cap having a silicon wafer filter, and the filter being disposed in parallel with the airtight member.

7. The infrared ray clinical thermometer as claimed in claim 6, wherein surrounding the infrared ray sensor, there is a heat transferring member (which is made of a metal) for transferring the ambient heat to the infrared ray sensor; and
a thermal diffusion member is provided for securing the infrared ray sensor and the heat transferring member, and for transferring the ambient heat of the external auditory conduit to the infrared ray sensor.

8. The infrared ray clinical thermometer as claimed in claim 7, wherein the heat transferring member is made of copper, and the thermal diffusion member is made of an epoxy resin,

9. The infrared ray clinical thermometer as claimed in any one of claims 2 to 8, wherein there is disposed a heat insulating part between the sensor housing and the infrared ray sensor.

## FIG 1

# FIG 2

# FIG 3

## FIG 4

# FIG 5